# EUROPEAN PATENT SPECIFICATION

(11) **EP 3 905 743 B1**
(45) Date of publication and mention of the grant of the patent: **13.07.2022**
(21) Application number: 21180722.7
(22) Date of filing: 24.01.2018
(51) Int. Cl.: H04W 12/06, H04W 76/19, H04W 4/70

(54) **RE-ESTABLISHING A RADIO RESOURCE CONTROL CONNECTION**
WIEDERHERSTELLEN EINER VERBINDUNG ZUR FUNKRESSOURCENSTEUERUNG
RÉ-ÉTABLISSEMENT D'UNE CONNEXION DE COMMANDE DE RESSOURCE RADIO

(30) Priority: 25.01.2017 US 201762450152 P
(43) Date of publication of application: 03.11.2021
(62) Divisional of application: 19211475.9
(73) Proprietor: Telefonaktiebolaget LM Ericsson (publ), 164 83 Stockholm (SE)
(72) Inventor: Lehtovirta, Vesa, FI-02620 ESPOO (FI); Wifvesson, Monica, SE-226 52 LUND (SE); Nakarmi, Prajwol Kumar, SE-19142 SOLLENTUNA (SE)
(74) Representative: Ericsson

(56) References cited:
- EP-A1- 2 426 996
- US-A1- 2009 258 631
- INTEL CORPORATION: "Security of RRC Connection re-establishment of NB-IOT for CP Solution", 3GPP DRAFT; DRAFT_S3-162089_WAS_S3-161717_ENBIOT-MOBIL ITY-V1.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Santa Cruz (Spain); 20161107 - 20161111 15 November 2016 (2016-11-15), XP051200351, Retrieved from the Internet: URL:http://www.3gpp.org/ftp/tsg_sa/WG3_Sec urity/TSGS3_85_Santa_Cruz/Docs/ [retrieved on 2016-11-15]

## Description

### TECHNICAL FIELD

The invention relates to methods and computer programs for re-establishing a Radio Resource Control connection for Control Plane Internet-of-Things optimizations between a User Equipment and a target evolved NodeB. Network nodes in the form of Mobility Management Entities, and target evolved NodeBs are also disclosed.

### BACKGROUND

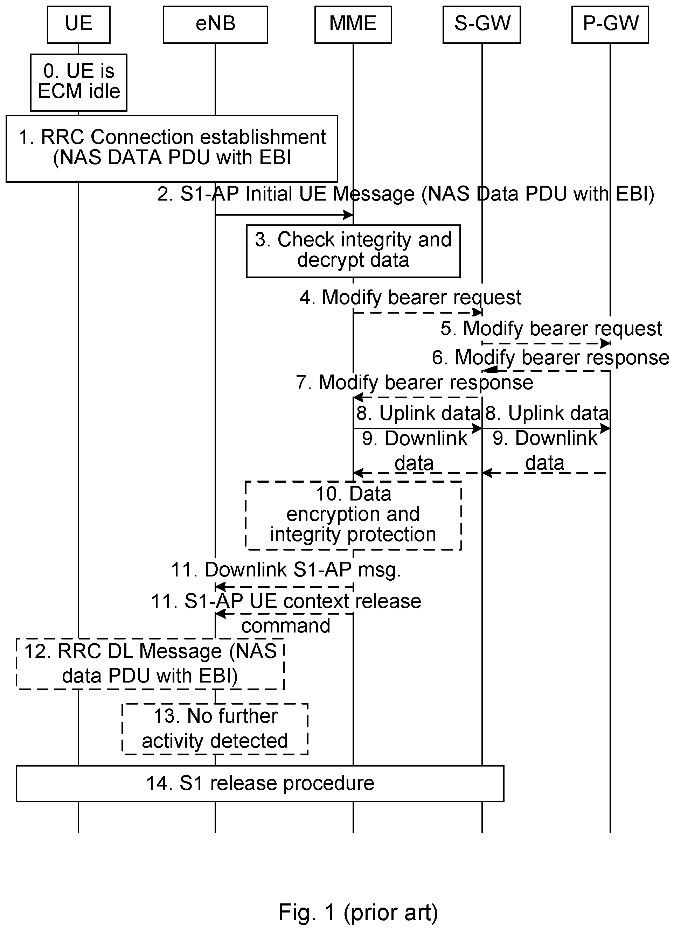

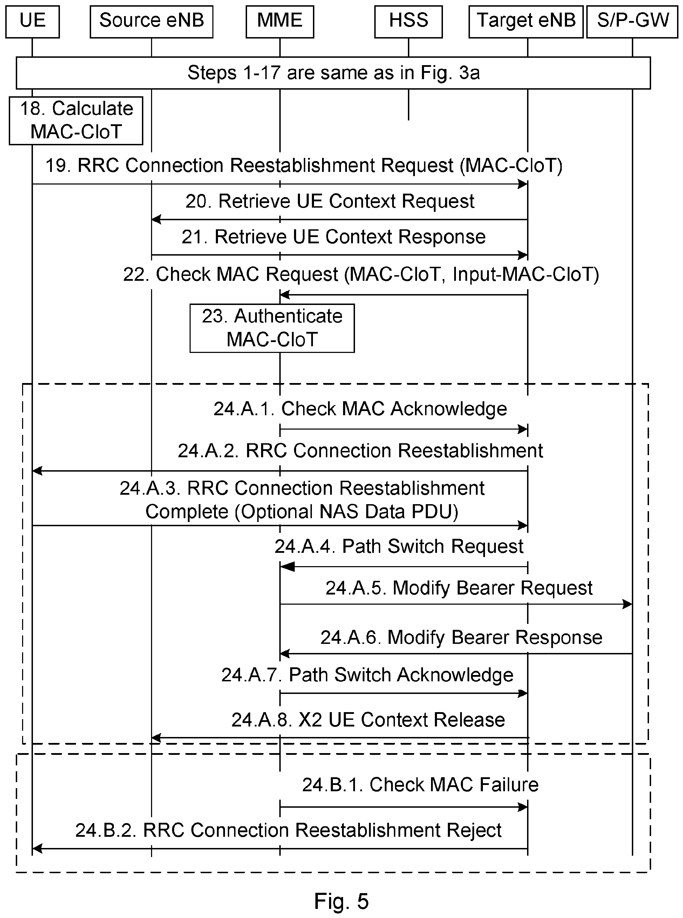

Control Plane (CP) Cellular Internet of Things (CIoT) optimizations (also called Data Over Non-Access Stratum (NAS) (DoNAS)) is a solution for transporting data over NAS as specified in 3rd Generation Partnership Project (3GPP) technical specification TS 23.401 V14.2.0, clause 5.3.4B (and other specifications, e.g. TS 24.301 V14.2.0). Security features are specified in TS 33.401 V14.1.0, clause 8.2. The security impact of the basic solution is very limited. The purpose of the DoNAS feature is sending data over NAS signalling without establishing data radio bearers (DRBs) and without establishing Access Stratum (AS) security. The intention is to save signalling. Fig. 1, which corresponds to Fig 5.3.4B.2-1 of TS 23.401 V14.2.0, illustrates the principle.

Work item in 3GPP document R3-161324 looks at mobility enhancements for CP CIoT. Handovers are not supported for CP CIoT, but a User Equipment (UE) may anyway move causing a radio link failure (RLF) when the UE is in connected mode, i.e. has Radio Resource Control (RRC) connection with an evolved NodeB (eNB). This has raised the issue of what to do in such case. Since AS security is not supported for CP CIoT feature, the existing mechanisms for RLF cannot be used securely as it is. In other words, it is not acceptable security-wise to use the existing RLF handling mechanism in the CP CIoT.

The RRC Layer is in LTE (Long Term Evolution) systems, see e.g.3GPP TS 36.331 V14.1.0 specified as including an information element (IE) called ShortMAC-I which is used for identification of the UE, for example, during RRC Connection Reestablishment procedures. The calculation of the ShortMAC-I includes the following as input:
- RRC integrity key: BIT STRING (SIZE (128))
- Target cell's identity: BIT STRING (SIZE (28))
- Source cell's physical cell identity: INTEGER (0...503)
- UE's C-RNTI (Cell Radio Network Temporary Identifier) at the source cell: BIT STRING (SIZE (16))

The function used is specified in TS 33.401 V14.1.0.

The RRC Layer is in LTE systems, specified as including an information element (IE) called ShortResumeMAC-I which is used for identification of the UE, for example, during RRC Connection Resume procedures. The calculation of the ShortResumeMAC-I includes the following as the input:
- RRC integrity key: BIT STRING (SIZE (128))
- Target cell's identity: BIT STRING (SIZE (28))
- Source cell's physical cell identity: INTEGER (0...503)
- UE's C-RNTI at the source cell: BIT STRING (SIZE (16))
- Resume constant

Note that the calculation of ShortResumeMAC-I includes additionally a resume constant, which allows differentiation of ShortMAC-I from ResumeShortMAC-I. The used function is specified in TS 33.401 V14.1.0.

US-2009/258631-A1 discloses a feature in a telecommunication system, which feature relates to handover, more specifically handover control signalling. Embodiments of the system comprise nodes such as a Mobility Management Entity (MME), a User equipment (UE), a target eNB and a source eNB. The document is related to chaining of authorization tokens for a UE during handover.

The 3GPP document S3-162089 (was S3-161717) with the title "Security of RRC Connection re-establishment of NB-IOT for CP Solution" discloses a solution where a Mobility Management Entity (MME) provides a key K_{eNB-RRC} to a User Equipment AS.

EP-2426996-A1 discloses a service recovery method in which an RRC reestablishment request or a cell update message from a UE is received.

### SUMMARY

It is an object of the invention to enable reduced signalling and/or processing power during re-establishing of a radio resource control connection for Control Plane Internet-of-Things optimizations.

According to a first aspect of the invention, there is presented a method for re-establishing a Radio Resource Control (RRC) connection for Control Plane (CP) Internet-of-Things (IoT) optimizations between a User Equipment (UE) and a target evolved NodeB (target eNB). The method is performed by the target eNB and comprises receiving an RRC connection re-establishment request from the UE, wherein the RRC connection re-establishment request includes an authentication token generated with a Non Access Stratum (NAS) integrity key and a target cell's identity as input to a NAS 128-bit integrity algorithm; sending a verification message to a Mobility Management Entity (MME), wherein the verification message includes the received authentication token; and receiving a response from the MME, of verification of the authentication token. Hereby is achieved, for example, that Access Stratum (AS) keys do not need to be generated.

According to a second aspect, there is presented a method for re-establishing an RRC connection for CP IoT optimizations between a UE and a target eNB. The method is performed by an MME, and comprises receiving a verification message from the target eNB, wherein the verification message includes an authentication token generated in the UE with a NAS integrity key and a target cell's identity as input to a NAS 128-bit integrity algorithm; verifying the received authentication token; and sending to the target eNB a verification response message, which verifies the received authentication token.

A third aspect relates to a target eNB for re-establishing an RRC connection for CP IoT optimizations between a UE and the target eNB. The target eNB comprises a processor; and a computer program product storing instructions that, when executed by the processor, causes the target eNB to receive an RRC connection re-establishment request from the UE, wherein the RRC connection re-establishment request includes an authentication token generated with a NAS integrity key and a target cell's identity as input to a NAS 128-bit integrity algorithm; send a verification message to an MME, wherein the verification message includes the received authentication token; and receive a response from the MME, of verification of the authentication token.

In an embodiment of the third aspect, the verification message is a Check MAC request, and the response is a Check MAC acknowledge or a Check MAC failure. In such an embodiment, the Check MAC request may include MAC-CIoT as said authentication token, and/or Input-MAC-CIoT.

In another embodiment of the third aspect, the verification message is a Path Switch Request, and the response is a Patch Switch Request Acknowledge or a Path Switch Request Failure. In such an embodiment, the Patch Switch Request may include MAC-CIoT as said authentication token and/or Input-MAC-CIoT.

A fourth aspect relates to an MME for re-establishing an RRC connection for CP IoT optimizations between a UE and a target eNB. The MME comprises a processor; and a computer program product storing instructions that, when executed by the processor, causes the MME to: receive a verification message from the target eNB, wherein the verification message includes an authentication token generated in the UE with a NAS integrity key and a target cell's identity as input to a NAS 128-bit integrity algorithm; verify the received authentication token; and send to the target eNB a verification response message which verifies the received authentication token.

A fifth aspect relates to a computer program for re-establishing an RRC, connection for CP IoT optimizations between a UE, and a target eNB, the computer program comprising computer program code which, when run on the target eNB, causes the target eNB to:
receive an RRC connection re-establishment request from the UE, wherein the RRC connection re-establishment request includes an authentication token generated with a NAS integrity key and a target cell's identity as input to a NAS 128-bit integrity algorithm;
send a verification message to an MME, wherein the verification message includes the received authentication token; and
receive a response from the MME, of verification of the authentication token.

A sixth aspect relates to a computer program for re-establishing an RRC, connection for CP IoT optimizations between a UE, and a target eNB, the computer program comprising computer program code which, when run on an MME, causes the MME to:
receive a verification message from the target eNB, wherein the verification message includes an authentication token generated in the UE with a Non Access Stratum integrity key and a target cell's identity as input to a NAS 128-bit integrity algorithm;
verify the received authentication token; and
send to the target eNB a verification response message, verifying the received authentication token.

An seventh aspect relates to a method for re-establishing an RRC connection for CP IoT optimizations between a UE and a target eNB. This method is performed by the UE and comprises:
- generating an authentication token with a NAS integrity key and a target cell's identity as input to a NAS 128-bit integrity algorithm,
- sending a first RRC connection reestablishment message to the target eNB, wherein the first RRC connection re-establishment message includes the authentication token, and
- receiving a second RRC Connection re-establishment message from the target eNB.

The target cell's identity may in an embodiment of the first, second, third and fourth aspect also be included in the verification message.

Generally, all terms used in the itemized list are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig. 1 schematically shows DoNAS principle signalling;
Fig. 2 schematically illustrates an environment where embodiments presented herein can be applied;
Fig. 3a schematically shows signalling according to an embodiment presented herein;
Fig. 3b schematically shows signalling according to the embodiment presented in conjunction with Fig 3a,
Fig. 4 schematically shows signalling according to an embodiment presented herein;
Fig. 5 schematically shows signalling according to an embodiment presented herein;
Figs. 6A-6D are flow charts illustrating methods according to embodiments presented herein;
Figs. 7-9 are schematic diagrams illustrating some components of entities presented herein; and
Figs. 10-12 are schematic diagrams showing functional modules of embodiments presented herein.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

First, Radio Resource Control (RRC) connection re-establishment and RRC connection suspend/resume procedures are existing solutions, which could be candidates for handling radio link failure in case of a Control Plane (CP) Cellular Internet of Things (CIoT) optimizations case. Both of those existing solutions use a User Equipment's (UE's) authentication token as described in the background to show to an evolved NodeB (eNB) that a genuine UE wants to re-establish or resume an RRC connection. However, those solutions are relying on the existence of Access Stratum (AS) security (especially RRC security), but AS security and RRC security do not exist or are not used for CP CIoT optimizations. Therefore, the RRC connection re-establishment and the RRC connection suspend/resume procedures as they are, are not acceptable security-wise to be used for handling mobility in the CP CIoT.

Second, a solution described in the 3GPP contribution S3-161717 proposes that an authentication token would be based on a new RRC integrity key (called KeNB-RRC) which can be derived by both the UE and a Mobility Management Entity (MME), without setting up AS security (including RRC security) between the UE and the source eNB via AS Security Mode Command (SMC) procedure, and the token would be used between the UE and the target eNB. However, without AS SMC procedure being supported for the CP CIoT case, the UE and eNBs cannot agree on a common integrity algorithm, which would be used for token calculation and verification. Therefore the solution described in the 3GPP contribution S3-161717 seems to be unsuitable for handling mobility in the CP CIoT.

Instead of using AS keys, a Non-Access Stratum (NAS) integrity key is according to embodiments of the invention used to secure the RRC reestablishment for CP CIoT, e.g. RRC re-establishment between a UE and a target eNB in a CP CIoT scenario. In particular, an authentication token generated by a UE is calculated using the NAS integrity key The UE's authentication token is sent to an MME for checking. The following cases are identified and some of them are within the scope of the claimed invention of this application, whereas others may be within the scope of other applications:
The authentication token is sent from the UE to a target eNB. There are the following variant solutions of what can happen next:
1. the authentication token is sent from the target eNB to a source eNB
   1a. the authentication token is checked by the source eNB with an AS key (this embodiment is however part of another application PCT/EP2017/078012)
   1b. the authentication token is sent from the source eNB to the MME and checked by the MME with a NAS key, e.g. a NAS integrity key
2. the authentication token is sent from the target eNB to the MME
   2a. in a Path Switch message and the MME checks the token with a NAS key, e.g. a NAS integrity key as in the claims of this application
   2b. in some other message before a context fetch or Path Switch happens and the MME checks the token with a NAS key, e.g. a NAS integrity key as in the claims of this application

When the authentication token calculation is based on NAS keys, there is no need to establish AS keys at all. Generation of AS keys solely for use in RRC can therefore be avoided.

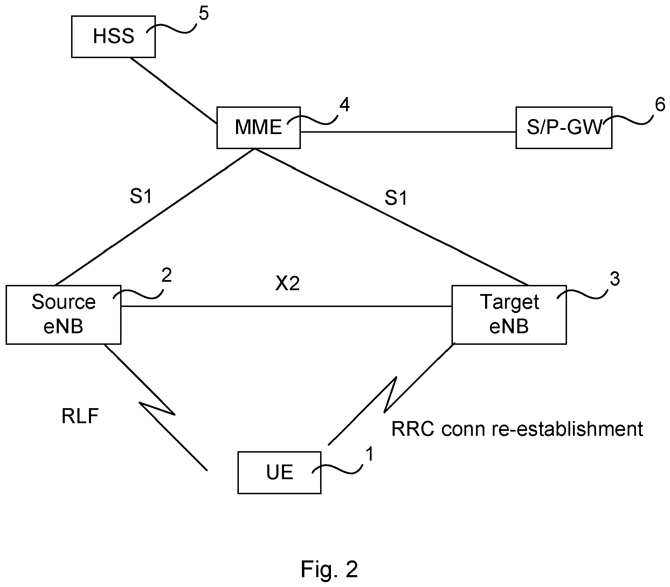

When the UE experiences a radio link failure (RLF) during CP CIoT (DoNAS) connection, the UE tries to re-establish the RRC connection to another eNB, see Fig. 2.

The UE's authentication token for use in CP CIoT (denoted MAC-CIoT) is a token that will be used for authentication of the UE, i.e. to determine that a genuine UE is present.

The MAC-CIoT may be calculated with the following as the input:
- Key-MAC-CIoT: NAS integrity key (NAS-int), denoted KNASint in 33.401 V14.1.0, or a key derived from NAS-int or a key derived from a root key KASME or any other root key in e.g. a 5G network or future network, such as KAUSF, KSEAF and KAMF
- Target cell's identity
- Source cell's physical cell identity
- UE's C-RNTI at the source cell
- constant (the constant allows differentiation of MAC-CIoT from ShortResumeMAC-I and ShortMAC-I).

In one embodiment the authentication token may thus be calculated with at least the target cell's identity and the NAS integrity key as input. It should be noted that the Key-MAC-CIoT/NAS key within the scope of the claims of this application is the NAS integrity key.

The input used for the calculation of the MAC-CIoT will be denoted Input-MAC-CIoT.

The function used for the calculation of the MAC-CIoT (denoted Fun-MAC-CIoT) could be the same used in Annex B.2 of TS 33.401 for RRC reestablishment and RRC resume, i.e. a NAS 128-bit integrity algorithm, which may be 128-EIA1, 128-EIA2 and 128-EIA3.

Referring to Fig. 2, when the MME 4 has authenticated the UE 1 and security has been established between the MME and the UE, both know the Fun-MAC-CIoT and have or can derive the Key-MAC-CIoT.

A MAC-CIoT token may be sent from the UE to the target eNB 3.

There are the following variant solutions of what can happen next:
1. MAC-CIoT Token is sent from the target eNB 3 to the source eNB 2
   1a. MAC-CIoT Token is checked by the source eNB 2 with AS key (not part of the claimed invention of this application)
   1b. MAC-CIoT Token is sent from source eNB 2 to MME 4 and checked by the MME 4 with a NAS key
2. MAC-CIoT Token is sent from the target eNB 3 to the MME 4
   2a. in Path Switch message and the MME 4 checks the token with NAS key
   2b. in some other message before the context fetch or Path Switch happens and the MME 4 checks the token with the NAS key

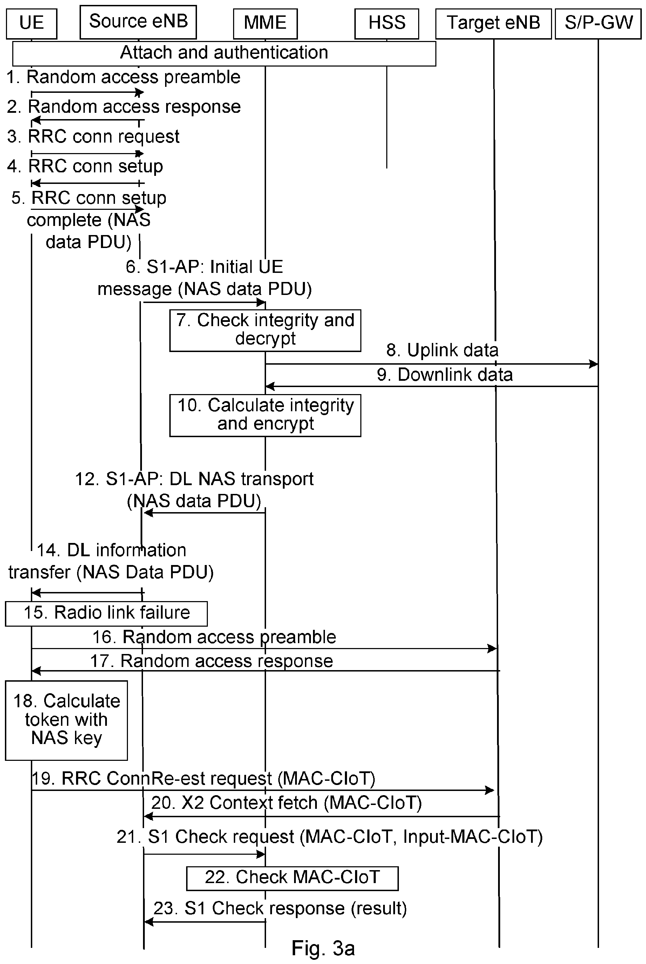

Variant 1b: MAC-CIoT is sent from the target eNB to the source eNB and from source eNB to MME and checked by the MME with the NAS key, see Fig. 3a-b. The order of the steps, messages, fields may be altered; messages may be combined; fields may be put in different messages, etc. to achieve the same effect.

This is an example applicable to a situation where NAS data for CP CIoT optimizations is sent and RLF happens, e.g. during the sending of the NAS data.

Steps 1 to 15 of Fig.3a are not novel as such in that they are disclosed in current 3GPP specifications. The UE sets up RRC connection and sends data over NAS, which is forwarded from the MME) to Serving-Gateway (S-GW)/Packet Data Network-Gateway (P-GW). Radio link failure happens (in step 15). The RLF may also happen before the UE has received Down Link (DL) data.

Step 16. UE initiates RRC connection by sending Random Access message to the target eNB.

Step 17. The target eNB responds with Random Access Response to the UE.

Step 18. UE generates an authentication token, MAC-CIoT. The token may be calculated in the following way:
token = f(source PCI, source C-RNTI, target Cell-ID, NAS key, replay input), where the NAS key is the current NAS integrity key or a derivative thereof. f=function.

Step 19. The UE sends an RRC message to the target eNB including the MAC-CIoT. The RRC message can be e.g. RRC connection re-establishment request (as is illustrated in Fig. 3a), RRC resume request, or some other RRC message. In the claims of the present application, the RRC message is the RRC connection re-establishment request.

Step 20. The target eNB sends an X2 message to the source eNB including the MAC-CIoT and Input-MAC-CIoT if needed. The X2 message can be e.g. X2 context fetch message.

Step 21. The source eNB sends an S1 message to the MME including the MAC-CIoT and Input-MAC-CIoT.

Step 22. Upon receiving the MAC-CIoT and Input-MAC-CIoT, the MME verifies the MAC-CIoT by performing the same calculation, which the UE performed in step 18 and comparing it with the received MAC-CIoT. If the verification is successful, the MME sends an S₁ message indicating success to the source eNB. If the verification is not successful, the MME sends an S₁ message indicating error to the source eNB.

Step 23. Upon receiving the S₁ message from the MME, the source eNB checks the result code in the message.

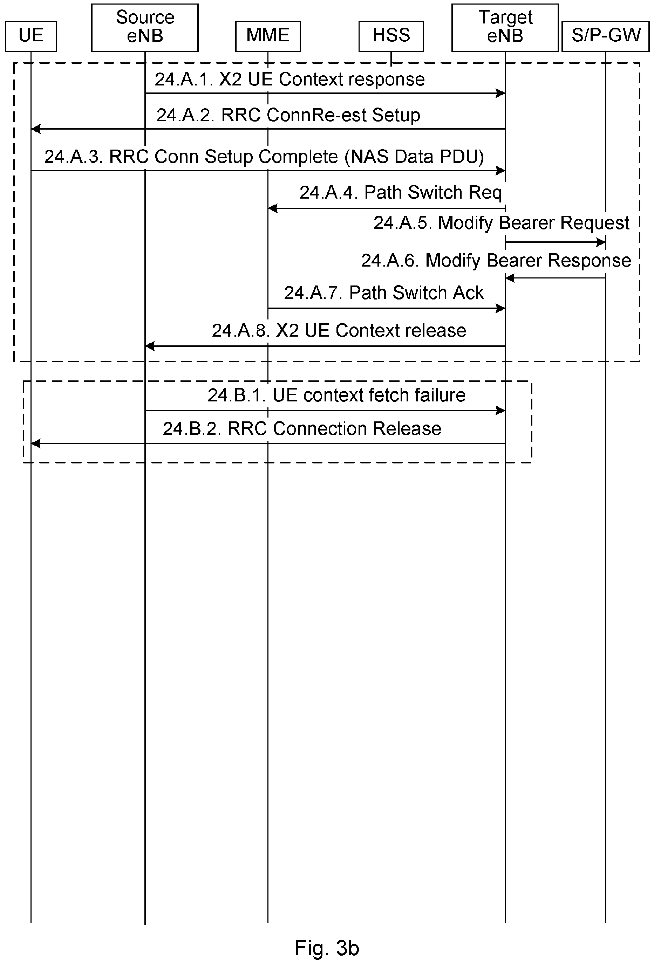

Step 24 illustrated in Fig 3b: If the authentication in Step 23 succeeds:
24.A.1. The source eNB sends UE context response.
24.A.2. and 24.A.3. The target eNB runs rest of RRC connection with the UE including e.g. an RRC Connection Re-establishment Setup from the target eNB to the UE and an RRC Connection Setup complete message from the UE to the target eNB.
24.A.4. to 24.A.7. Path Switch and Modify bearer procedures, here comprising a Path Switch Request from the target eNB to the MME, a Modify Bearer Request from the target eNB to the S/P-GW, a Modify Bearer Response from the S/P-GW to the target eNB, and a Path Switch Acknowledge from the MME to the target eNB.
24.A.8. The target eNB now tells the source eNB to release the UE context by sending an X2 message called UE Context Release.

If the authentication in Step 23 fails:
24.B.1. The source eNB sends UE context Fetch Failure message to the target eNB. The target eNB then knows that the MAC-CIoT mentioned in earlier steps is not authentic.
24.B.2. The target eNB triggers release of the RRC connection with the UE by sending the RRC Connection Release to the UE.

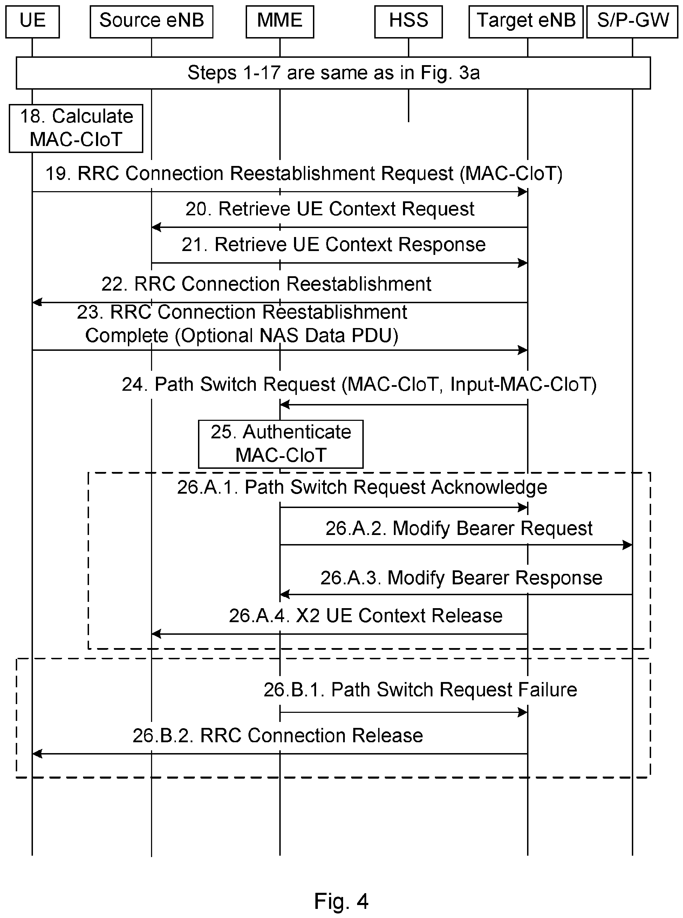

Variant 2a: The MAC-CIoT is sent from the target eNB to the MME in a SlAP Path Switch Request message. The MME authenticates the MAC-CIoT. This is illustrated in Fig. 4.

This variant 2a is based on an existing SlAP message called Path Switch Request which is sent from the target eNB to the MME. The Path Switch Request is modified to be able to carry the MAC-CIoT and Input-MAC-CIoT. The existing SlAP messages called Path Switch Request Acknowledge and Path Switch Failure which are sent from the MME to the target eNB are used to respectively indicate that the MAC-CIoT was authentic or not-authentic. An example embodiment of doing so is shown in Fig. 4 and the steps are described below. The order of the steps, messages, and fields may be altered; messages may be combined; fields may be put in different messages, etc. to achieve the same effect.

Steps 1-17 are the same as described above in connection with Fig. 3a.

Steps 18-19 are also the same as describe above in connection with Fig. 3a, but these are also shown in Fig. 4 for the completeness of RRC Connection Reestablishment procedure.

Step 20. The target eNB requests the source eNB to send the UE's context. The existing X2 message called Retrieve UE Context Request could be adapted as necessary (e.g., using ReestabUE-Identity instead of ResumeIdentity).

Step 21. The source eNB sends the UE's context to the target eNB. The existing X2 message called Retrieve UE Context Response could be adapted as necessary.

Step 22. The target eNB sends RRC Connection Reestablishment message to the UE.

Step 23. The UE sends RRC Connection Reestablishment Complete message, optionally containing NAS Data PDU (Protocol Data Unit) to the target eNB.

Step 24. The target eNB sends Path Switch Request to the MME. In the Path Switch Request, the target eNB includes MAC-CIoT and Input-MAC-CIoT. The Input MAC-CIoT may be encrypted, but it does not have to be encrypted in all embodiments. The target eNB received the MAC-CIoT in Step 19. The Input-MAC-CIoT may include information that the target eNB received in Step 19 and/or Step 21, and/or the target eNB's own information. The Path Switch Request contains the UE's information that enables the MME to identify the UE's context in the MME. That UE's information is today called "Source MME UE SlAP ID", which the target eNB is able to provide from the information it received in Step 23.

Step 25. The MME authenticates the MAC-CIoT using the Input-MAC-CIoT and the Key-MAC-CIoT as input to the Fun-MAC-CIoT.

Step 26.
If the authentication in Step 25 succeeds:
26.A.1. The MME sends Path Switch Request Acknowledge message to the target eNB. The target eNB knows that the MAC-CIoT mentioned in earlier steps is authentic.
26.A.2.-26.A.3. The MME triggers bearer modification, e.g. by sending a Modify Bearer Request to the S/P-GW and receiving a Modify Bearer response from the S/P-GW.
26.A.4. The target eNB now tells the source eNB to release the UE context by sending X2 message called UE Context Release.

If the authentication in Step 25 fails, steps 26.B.1 and 26.B.2 follow:
26.B.1. The MME sends Path Switch Request Failure message to the target eNB. The target eNB then knows that the MAC-CIoT mentioned in earlier steps of this variant is not authentic.
26.B.2. The target eNB triggers release of the RRC connection with the UE by sending the RRC Connection Release to the UE.

Variant 2b: The MAC-CIoT is sent from the target eNB to the MME in new SlAP message. The MME authenticates the MAC-CIoT. This is illustrated in Fig. 5.

This variant is based on a new SlAP message (denoted Check MAC Request) which is sent from the target eNB to the MME. The CheckMACReq message is able to carry the MAC-CIoT and Input-MAC-CIoT. Similarly, new SlAP messages, denoted Check MAC Acknowledge and Check MAC Failure, which are sent from the MME to the target eNB are used to respectively indicate that the MAC-CIoT was authentic or not-authentic. An example embodiment of doing so, is shown in Fig. 5 and the steps are described below. The order of the steps, messages, fields may be altered; messages may be combined; fields may be put in different messages, etc. to achieve the same effect.

Steps 1-17 are same as discussed above in connection with Fig. 3.

Steps 18-19 are also same as discussed above in connection with Fig. 3, but these are also shown in Fig. 5 for the completeness of RRC Connection Reestablishment procedure.

Step 20. The target eNB requests the source eNB to send the UE's context. The existing X2 message called Retrieve UE Context Request could be adapted as necessary (e.g., using ReestabUE-Identity instead of ResumeIdentity).

Step 21. The source eNB sends the UE's context to the target eNB. The existing X2 message called Retrieve UE Context Response could be adapted as necessary. The said UE's context tells the target eNB the corresponding MME that the UE is registered at.

Step 22. The target eNB sends Check MAC Request to the MME identified in Step 21. In the Check MAC Request, the target eNB includes MAC-CIoT and Input-MAC-CIoT. The target eNB received said MAC-CIoT in Step 19. The Input-MAC-CIoT could include information that the target eNB received in Step 19 and/or Step 21, and/or the target eNB's own information. The Check MAC Request can also contain UE's information that enables the MME to identify the UE's context in the MME. That UE's information could be for example the MME UE SlAP ID that the target eNB received from the source eNB in Step 21.

Step 23. The MME authenticates the MAC-CIoT using the Input-MAC-CIoT and the Key-MAC-CIoT as input to the Fun-MAC-CIoT.

Step 24.
If the authentication in Step 23 succeeds:
24.A.1. The MME sends Check MAC Request Acknowledge message to the target eNB. The target eNB now knows that the MAC-CIoT mentioned in earlier steps is authentic.
24.A.2.-24.A.3. The target eNB sends RRC Connection Reestablishment message to the UE and the UE sends RRC Connection Reestablishment Complete message, optionally containing NAS Data PDU to the target eNB.
24.A.4.-26.A.7. These steps are normal path switch and bearer modification procedures.
26.A.8. The target eNB now tells the source eNB to release the UE context by sending X2 message called UE Context Release.

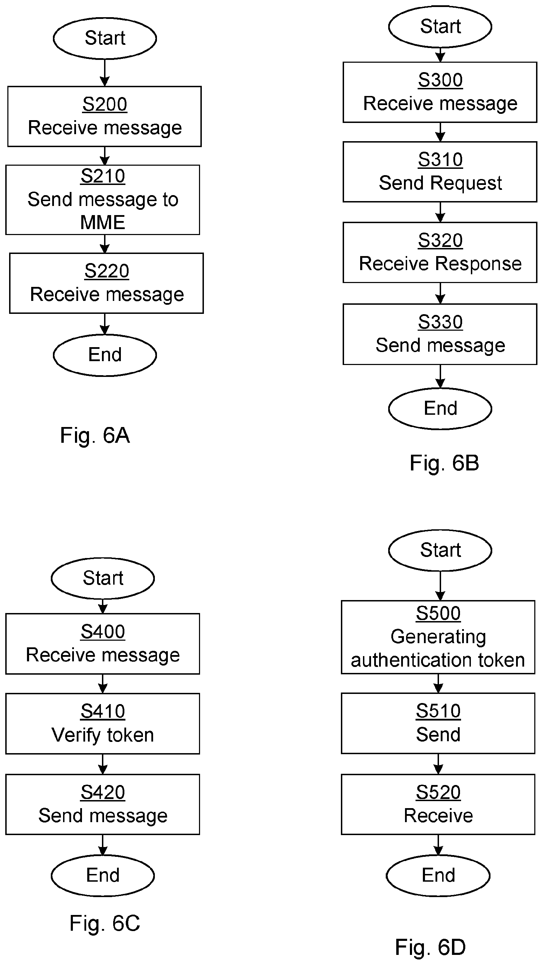

If the authentication in Step 23 fails:
24.B.1. The MME sends Check MAC Failure message to the target eNB. The target eNB knows that the MAC-CIoT mentioned in earlier steps is not authentic.
24.B.2. The target eNB tells the UE that the UE's request is rejected by sending the RRC Connection Reestablishment Reject message to the UE.A method, according to an embodiment, for re-establishing an RRC connection, e.g. for CP IoT EPS (Evolved Packet System) optimization, between a UE and a target eNB is presented with reference to Fig. 6A. The method is performed in a target eNB 3 and comprises receiving, illustrated with a step S200, an RRC message from an UE 1, wherein the RRC message includes an authentication token generated with a NAS integrity key as input. In a second step S210, the target eNB sends a verification message to an MME, wherein the verification message includes the received authentication token. In a third step S220, the target eNB receives a response from the MME, the response verifying the authentication token.

Alternatives to the NAS integrity key, may be other NAS keys, such as a key derived from the NAS integrity key. It may alternatively, albeit not covered by the claims of this application, be a key derived from a root NAS key, such as KASME, and in a 5G environment e.g. KAMF, KAUSF and KSEAF.

The RRC message is in the claims an RRC connection re-establishment request, but it may in other embodiments be an RRC resume request.

The verification message may be a Check MAC request, and the response may be a Check MAC acknowledge or a Check MAC failure. The Check MAC request may include MAC-CIoT and/or Input-MAC-CIoT.

The verification message may be a Path Switch Request, and the response may be a Patch Switch Request Acknowledge or a Path Switch Request Failure. The Patch Switch Request may include MAC-CIoT and/or Input-MAC-CIoT.

A method, according to an embodiment, for re-establishing an RRC connection, e.g. for CP IoT EPS optimization, between a UE and a target eNB is presented with reference to Fig. 6B. The method is performed in a source eNB 2 and comprises receiving S300 an X2 message from the target eNB 3, wherein the message includes authentication token generated by a UE 1 with a NAS integrity key as input; sending S310 a check request to an MME 4, to verify the received authentication token, said check request including the authentication token; receiving S320 a check response from the MME, which check response indicates a verification of the received authentication token; and sending S330 a UE context failure message to the target eNB.

A method, according to an embodiment, for re-establishing a RRC connection, e.g. for CP IoT EPS optimization, between a UE and a target eNB is presented with reference to Fig. 6C. The method is performed by an MME 4 and comprises receiving S400 a verification message from the target eNB, wherein the verification message includes an authentication token generated in the UE 1 with a NAS integrity key as input, verifying S410 the received authentication token, and sending S420 to the target eNB a verification response message, verifying the received authentication token.

The receiving S410 of a verification message may be embodied as receiving a Patch Switch Request from a target eNB 3, and sending a verification response message may be embodied as sending a Path Switch Request Acknowledge to the target eNB or sending a Patch Switch Request Failure to the target eNB.

The receiving S410 of a verification message may alternatively be embodied as receiving a Check MAC request from a target eNB 3, and sending a verification response message may be embodied as sending a Check MAC acknowledge or a Check MAC failure to the target eNB. The Check MAC request may include MAC-CIoT and/or Input-MAC-CIoT.

A method, according to an embodiment, for re-establishing a RRC connection, e.g. for CP IoT EPS optimization, between a UE and a target eNB is presented with reference to Fig. 6D. The method is performed by the UE 1 and comprises generating S500 an authentication token with a Non Access Stratum integrity key as input. The authentication token is in an embodiment also calculated based on other parameters as described above. One such other input for calculation of the authentication parameter is the target cell identity. The method also comprises sending S510 a first RRC connection reestablishment message to the target eNB 3, wherein the first RRC connection re-establishment message includes the authentication token, and receiving S520 a second RRC Connection re-establishment message from the target eNB.

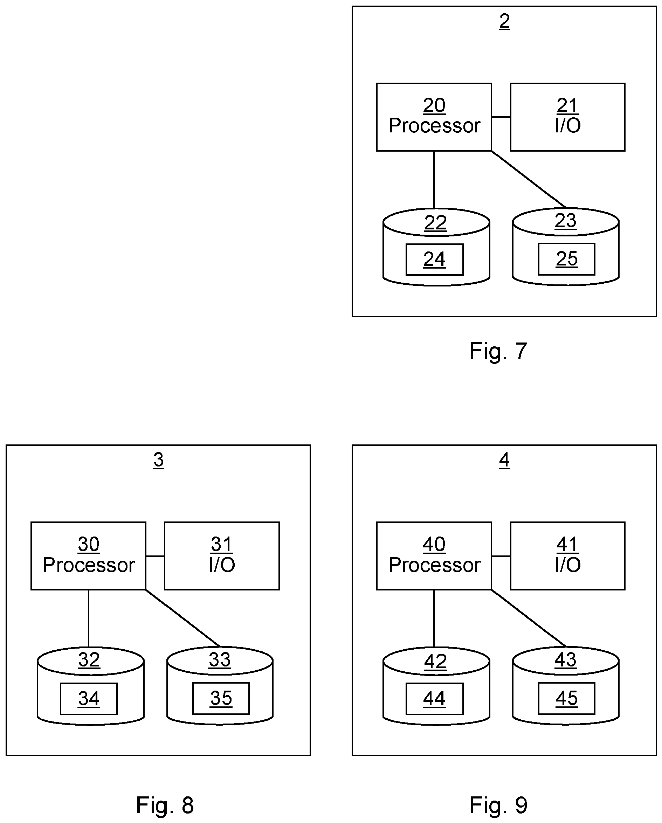

A target eNB, according to an embodiment, for re-establishing an RRC connection between a UE and a target eNB 3, is presented with reference to Fig. 8. The target eNB comprises a processor 30 and a computer program product 32, 33 storing instructions that, when executed by the processor, causes the target eNB to receive an RRC connection re-establishment request from the UE 1, wherein the RRC connection re-establishment request includes an authentication token generated with a NAS integrity key as input, send a verification message to an MME, wherein the verification message includes the received authentication token; and receive a response from the MME, of verification of the authentication token.

The target eNB may further be caused to send an X2 message to a source eNB 2, wherein the X2 message includes the received authentication token, and to receive a UE context failure from the source eNB.

A source eNB 2, according to an embodiment, for re-establishing an RRC connection between a UE and a target eNB 3, is presented with reference to Fig. 7. The source eNB comprises a processor 20 and a computer program product 22, 23 storing instructions that, when executed by the processor, causes the source eNB to receive an X2 message from the target eNB 3, wherein the message includes authentication token generated by a UE 1 with a NAS integrity key as input; send a check request to an MME 4, to verify the received authentication token, said check request including the authentication token; to receive a check response from the MME, verifying the received authentication token; and to send a UE context failure message to the target eNB.

An MME, according to an embodiment, for re-establishing an RRC connection between a UE and a target eNB is presented with reference to Fig. 9. The MME 4 comprises a processor 40 and a computer program product 42, 43 storing instructions that, when executed by the processor, causes the MME to receive a verification message from the target eNB (3), wherein the verification message includes an authentication token generated in a UE 1 with a NAS integrity key as input; to verify the received authentication token; and to send to the target eNB (3) a verification response message, verifying the received authentication token.

The receive a verification message may be embodied as receive a Patch Switch Request from a target eNB 3, and send a verification response message may be embodied as send a Path Switch Request Acknowledge to the eNB or send a Patch Switch Request Failure to the target eNB.

The receive a verification message may be embodied as receive a Check MAC request from a target eNB 3, and send a verification response message may be embodied as send a Check MAC acknowledge or a Check MAC failure to the target eNB.

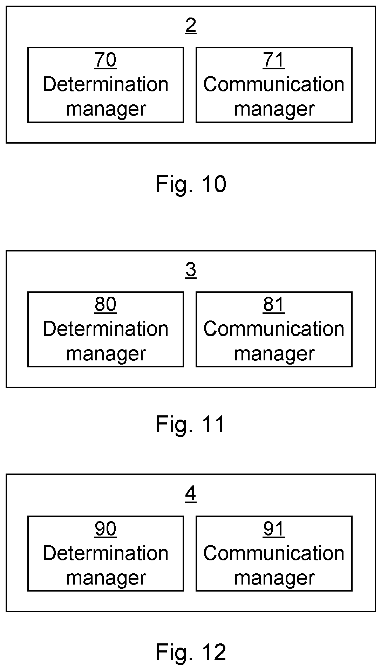

A target eNB, according to an embodiment, for re-establishing an RRC connection between a UE and a target eNB, is presented with reference to Fig. 11. The target eNB comprises a communication manager 81 and a determination manager 80. The communication manager 81 is for receiving an RRC connection re-establishment request from the UE 1, wherein the RRC connection re-establishment request includes an authentication token generated with a NAS integrity key as input; sending a verification message to an MME, wherein the verification message includes the received authentication token; and receiving a response from the MME, of verification of the authentication token.

A source eNB, according to an embodiment, for re-establishing an RRC connection between a UE and a target eNB, is presented with reference to Fig. 10. The source eNB comprises a communication manager 71 for receiving an X2 message from the target eNB 3, wherein the X2 message includes an authentication token generated by the UE 1 with a NAS integrity key as input; for sending a check request to an MME 4, to verify the received authentication token, said check request including the authentication token; for receiving a check response from the MME, verifying the received authentication token; and for sending a UE context failure message to the target eNB.

An MME, according to an embodiment, for re-establishing an RRC connection between a UE and a target eNB is presented with reference to Fig. 12. The MME 4 comprises a communication manager 91 and a determination manager 90. The communication manager 91 is for receiving a verification message from the target eNB, wherein the verification message includes an authentication token generated in the UE 1 with a NAS integrity key as input, and for sending to the target eNB a verification response message, verifying the received authentication token. The determination manager 90 is for verifying the received authentication token.

A computer program34, 35, according to an embodiment, for re-establishing an RRC connection between a UE and a target eNB, is presented in Fig. 8. The computer program 34, 35 comprises computer program code which, when run on a target eNB 3, causes the target eNB to receive an RRC connection re-establishment request from the UE 1, wherein the RRC connection re-establishment request includes an authentication token generated with a NAS integrity key as input; send a verification message to an MME, wherein the verification message includes the received authentication token; and receive a response from the MME, of verification of the authentication token.

A computer program 24, 25, according to an embodiment, for re-establishing a RRC connection between a UE and a target eNB, is presented in Fig. 7. The computer program 24, 25 comprises computer program code which, when run on a source eNB 2, causes the source eNB to receive a X2 message from the target eNB 3, wherein the X2 message includes an authentication token generated by a UE 1 with a NAS integrity key as input; to send a check request to an MME 4, to verify the received authentication token, wherein the check request includes the received authentication token; to receive a check response from the MME, verifying the received authentication token; and to send a UE context failure message to the target eNB.

A computer program 44, 45, according to an embodiment, for re-establishing a RRC connection between a UE and a target eNB, is presented in Fig. 9. The computer program 44, 45 comprises computer program code which, when run on an MME, causes the MME 4 to receive a verification message from the target eNB, wherein the verification message includes an authentication token generated in a UE 1 with a NAS integrity key as input, to verify the received authentication token, and to send to the target eNB a verification response message, verifying the received authentication token.

A computer program product is also presented, as illustrated in different forms with the ref. signs 22, 23, 32, 33, 42, 43. The computer program product comprises a computer program and a computer readable storage means on which one or more of the computer programs disclosed in Figs 7-9 are stored,.

Fig. 7 is a schematic diagram showing some components of the source eNB 2. The processor 20 may be provided using any combination of one or more of a suitable central processing unit, CPU, multiprocessor, microcontroller, digital signal processor, DSP, application specific integrated circuit etc., capable of executing software instructions of a computer program 24 stored in a memory. The memory can thus be considered to be or form part of the computer program product 22. The processor 20 may be configured to execute methods described herein with reference to Fig. 6B.

The memory may be any combination of read and write memory, RAM, and read only memory, ROM. The memory may also comprise persistent storage, which, for example, can be any single one or combination of magnetic memory, optical memory, solid state memory or even remotely mounted memory.

A second computer program product 23 in the form of a data memory may also be provided, e.g. for reading and/or storing data during execution of software instructions in the processor 20. The data memory can be any combination of read and write memory, RAM, and read only memory, ROM, and may also comprise persistent storage, which, for example, can be any single one or combination of magnetic memory, optical memory, solid state memory or even remotely mounted memory. The data memory may e.g. hold other software instructions 25, to improve functionality for the source eNB 2.

The source eNB 2 may further comprise an input/output (I/O) interface 21 including e.g. a user interface. The source eNB 2 may further comprise a receiver configured to receive signalling from other nodes, and a transmitter configured to transmit signalling to other nodes (not illustrated). Other components of the source eNB 2 are omitted in order not to obscure the concepts presented herein.

Fig. 10 is a schematic diagram showing functional blocks of the source eNB 2. The modules may be implemented as only software instructions such as a computer program executing in the cache server or only hardware, such as application specific integrated circuits, field programmable gate arrays, discrete logical components, transceivers, etc. or as a combination thereof. In an alternative embodiment, some of the functional blocks may be implemented by software and other by hardware. The modules correspond to the steps in the methods illustrated in Fig. 6B, comprising a determination manager unit 70 and a communication manager unit 71. In the embodiments where one or more of the modules are implemented by a computer program, it shall be understood that these modules do not necessarily correspond to process modules, but can be written as instructions according to a programming language in which they would be implemented, since some programming languages do not typically contain process modules.

The communication manger 71 is for enabling re-establishing a RRC connection between a UE and a target eNB. This module corresponds to the receive step S300, the send step S310, the receive step S320 and the send step S330 of Fig. 6B. This module can e.g. be implemented by the processor 20 of Fig. 7, when running the computer program.

Fig. 8 is a schematic diagram showing some components of the target eNB 3. The processor 30 may be provided using any combination of one or more of a suitable central processing unit, CPU, multiprocessor, microcontroller, digital signal processor, DSP, application specific integrated circuit etc., capable of executing software instructions of a computer program 34 stored in a memory. The memory can thus be considered to be or form part of the computer program product 32. The processor 30 may be configured to execute methods described herein with reference to Fig. 6A.

The memory may be any combination of read and write memory, RAM, and read only memory, ROM. The memory may also comprise persistent storage, which, for example, can be any single one or combination of magnetic memory, optical memory, solid state memory or even remotely mounted memory.

A second computer program product 33 in the form of a data memory may also be provided, e.g. for reading and/or storing data during execution of software instructions in the processor 20. The data memory can be any combination of read and write memory, RAM, and read only memory, ROM, and may also comprise persistent storage, which, for example, can be any single one or combination of magnetic memory, optical memory, solid state memory or even remotely mounted memory. The data memory may e.g. hold other software instructions 35, to improve functionality for the target eNB 3.

The target eNB 3 may further comprise an input/output (I/O) interface 31 including e.g. a user interface. The target eNB 3 may further comprise a receiver configured to receive signalling from other nodes, and a transmitter configured to transmit signalling to other nodes (not illustrated). Other components of the target eNB 3 are omitted in order not to obscure the concepts presented herein.

Fig. 11 is a schematic diagram showing functional blocks of the target eNB 3. The modules may be implemented as only software instructions such as a computer program executing in the cache server or only hardware, such as application specific integrated circuits, field programmable gate arrays, discrete logical components, transceivers, etc. or as a combination thereof. In an alternative embodiment, some of the functional blocks may be implemented by software and other by hardware. The modules correspond to the steps in the methods illustrated in Fig. 6A, comprising a determination manager unit 80 and a communication manager unit 81. In the embodiments where one or more of the modules are implemented by a computer program, it shall be understood that these modules do not necessarily correspond to process modules, but can be written as instructions according to a programming language in which they would be implemented, since some programming languages do not typically contain process modules.

The communication manger 81 is for enabling re-establishing a RRC connection between a UE and a target eNB. This module corresponds to the receive step S200, the send step 210, the receive step 220 of Fig. 6A. This module can e.g. be implemented by the processor 30 of Fig. 8, when running the computer program, or as hardware in the form of an ASIC.

Fig. 9 is a schematic diagram showing some components of the MME 4. The processor 40 may be provided using any combination of one or more of a suitable central processing unit, CPU, multiprocessor, microcontroller, digital signal processor, DSP, application specific integrated circuit etc., capable of executing software instructions of a computer program 44 stored in a memory. The memory can thus be considered to be, or form part of the computer program product 42. The processor 40 may be configured to execute methods described herein with reference to Fig. 6C.

The memory may be any combination of read and write memory, RAM, and read only memory, ROM. The memory may also comprise persistent storage, which, for example, can be any single one or combination of magnetic memory, optical memory, solid state memory or even remotely mounted memory.

A second computer program product 43 in the form of a data memory may also be provided, e.g. for reading and/or storing data during execution of software instructions in the processor 40. The data memory can be any combination of read and write memory, RAM, and read only memory, ROM, and may also comprise persistent storage, which, for example, can be any single one or combination of magnetic memory, optical memory, solid state memory or even remotely mounted memory. The data memory may e.g. hold other software instructions 45, to improve functionality for the MME 4.

The MME 4 may further comprise an input/output (I/O) interface 41 including e.g. a user interface. The MME 4 may further comprise a receiver configured to receive signalling from other nodes, and a transmitter configured to transmit signalling to other nodes (not illustrated). Other components of the MME 4 are omitted in order not to obscure the concepts presented herein.

Fig. 12 is a schematic diagram showing functional blocks of the MME 4. The modules may be implemented as only software instructions such as a computer program executing in the cache server or only hardware, such as application specific integrated circuits, field programmable gate arrays, discrete logical components, transceivers, etc. or as a combination thereof. In an alternative embodiment, some of the functional blocks may be implemented by software and other by hardware. The modules correspond to the steps in the methods illustrated in Fig. 6C, comprising a determination manager unit 90 and a communication manager unit 91. In the embodiments where one or more of the modules are implemented by a computer program, it shall be understood that these modules do not necessarily correspond to process modules, but can be written as instructions according to a programming language in which they would be implemented, since some programming languages do not typically contain process modules.

The determination manger 90 is for enabling re-establishing a RRC connection between a UE and a target eNB. This module corresponds to the verify step 410 of Fig. 6C. This module can e.g. be implemented by the processor 40 of Fig. 9, when running the computer program.

The communication manger 91 is for enabling re-establishing a RRC connection between a UE and a target eNB. This module corresponds to the receive step S400 and send step S420 of Fig. 6C. This module can e.g. be implemented by the processor 40 of Fig. 9, when running the computer program.

The invention has mainly been described above with reference to a few embodiments. However, as is readily appreciated by a person skilled in the art, other embodiments than the ones disclosed above are equally possible within the scope of the invention, as defined by the appended claims.

## Claims

1. A method for re-establishing a Radio Resource Control, RRC, connection for Control Plane Cellular Internet-of-Things, CP CIoT, optimizations between a User Equipment (1), UE, and a target evolved NodeB (3), target eNB, if the UE (1) experiences a radio link failure during the CP CIoT,
the method being performed by the target eNB (3) and comprising:
receiving (S200) an RRC connection re-establishment request from the UE (1), wherein the RRC connection re-establishment request includes an authentication token generated with a Non Access Stratum, NAS, integrity key and a target cell's identity as input;
sending (S210) a verification message to a Mobility Management Entity (4), MME, wherein the verification message includes the received authentication token; and
receiving (S220) a response from the MME, of verification of the authentication token.

2. The method according to claim 1, including the target cell's identity in the verification message.

3. A method for re-establishment of a Radio Resource Control, RRC, connection for Control Plane Cellular Internet-of-Things, CP CIoT, optimizations between a User Equipment (1), UE, and a target evolved NodeB (3), target eNB, if the UE (1) experiences a radio link failure during the CP CIoT,
the method being performed by a Mobility Management Entity (4), MME, and comprising:
receiving (S400) a verification message from the target eNB (3), wherein the verification message includes an authentication token generated in the UE (1) with a Non Access Stratum, NAS, integrity key and a target cell's identity as input;
verifying (S410) the received authentication token; and
sending (S420) to the target eNB (3) a verification response message, verifying the received authentication token.

4. The method according to claim 3, wherein the verification message includes the target cell's identity.

5. A target evolved NodeB (3), target eNB, for re-establishing a Radio Resource Control, RRC, connection for Control Plane Cellular Internet-of-Things, CP CIoT, optimizations between a User Equipment (1), UE, and the target eNB (3) if the UE (1) experiences a radio link failure during the CP CIoT, the target eNB comprising:
a processor (30); and
a computer program product (32, 33) storing instructions that, when executed by the processor, causes the target eNB to:
receive an RRC connection re-establishment request from the UE (1), wherein the RRC connection re-establishment request includes an authentication token generated with a Non Access Stratum, NAS, integrity key and a target cell's identity as input;
send a verification message to a Mobility Management Entity (4), MME, wherein the verification message includes the received authentication token; and
receive a response from the MME, of verification of the authentication token.

6. The target eNB (3) according to claim 5, wherein the verification message is a Check MAC request, and the response is a Check MAC acknowledge or a Check MAC failure message.

7. The target eNB (3) according to claim 6, wherein the Check MAC request includes MAC-CIoT as said authentication token and/or Input-MAC-CIoT.

8. The target eNB (3) according to claim 5, wherein the verification message is a Path Switch Request, and the response is a Path Switch Request Acknowledge or a Path Switch Request Failure.

9. The target eNB (3) according to claim 8, wherein the Path Switch Request includes MAC-CIoT as said authentication token, and/or Input-MAC-CIoT.

10. The target eNB (3) according to claim 5, including the target cell's identity in the verification message.

11. A Mobility Management Entity (4), MME, for re-establishing a Radio Resource Control, RRC, connection for Control Plane Cellular Internet-of-Things, CP CIoT, optimizations between a User Equipment (1), UE, and a target eNB (3), if the UE (1) experiences a radio link failure during the CP CIoT, the MME (4) comprising:
a processor (40); and
a computer program product (42, 43) storing instructions that, when executed by the processor, causes the MME to:
receive a verification message from the target eNB (3), wherein the verification message includes an authentication token generated in the UE (1) with a Non Access Stratum integrity key and a target cell's identity as input;
verify the received authentication token; and
send to the target eNB (3) a verification response message, verifying the received authentication token.

12. The MME according to claim 11, wherein the verification message includes the target cell's identity.

13. A computer program (34, 35) for re-establishing a Radio Resource Control, RRC, connection for Control Plane Cellular Internet-of-Things, CP CIoT, optimizations between a User Equipment (1), UE, and a target NodeB (3), target eNB, if the UE (1) experiences a radio link failure during the CP CIoT, the computer program comprising computer program code which, when run on the target eNB (3), causes the target eNB to:
receive an RRC connection re-establishment request from the UE (1), wherein the RRC connection re-establishment request includes an authentication token generated with a Non Access Stratum, NAS, integrity key and a target cell's identity as input;
send a verification message to a Mobility Management Entity (4), MME, wherein the verification message includes the received authentication token; and
receive a response from the MME, of verification of the authentication token.

14. A computer program (44, 45) for re-establishing a Radio Resource Control, RRC, connection for Control Plane Cellular Internet-of-Things, CP CIoT, optimizations between a User Equipment (1), UE, and a target evolved NodeB (3), target eNB, if the UE (1) experiences a radio link failure during the CP CIoT, the computer program comprising computer program code which, when run on a Mobility Management Entity (4), MME, causes the MME (4) to:
receive a verification message from the target eNB (3), wherein the verification message includes an authentication token generated in the UE (1) with a Non Access Stratum integrity key and a target cell's identity as input;
verify the received authentication token; and
send to the target eNB (3) a verification response message, verifying the received authentication token.

15. A method for re-establishing a Radio Resource Control, RRC, connection for Control Plane Cellular Internet-of-Things, CP CIoT, optimizations between a User Equipment (1), UE, and a target evolved NodeB (3), target eNB, if the UE (1) experiences a radio link failure during the CP CIoT, the method being performed by the UE (1) and comprising:
- generating an authentication token with a Non Access Stratum, NAS, integrity key and a target cell's identity as input,
- sending a first RRC connection reestablishment message to the target eNB (3), wherein the first RRC connection re-establishment message includes the authentication token, and
- receiving a second RRC Connection re-establishment message from the target eNB (3).

## Patentansprüche

1. Verfahren zum Wiederherstellen einer Funkressourcensteuerungsverbindung, RRC-Verbindung, für Cellular-Internet-of-Things-Optimierungen der Steuerungsebene, CP CIoT, zwischen einer Benutzereinrichtung (1), UE, und einem Ziel-entwickelten NodeB (3), Ziel-eNB, wenn die UE (1) während der CP CIoT einen Funkverbindungsausfall erfährt,
wobei das Verfahren durch den Ziel-eNB (3) durchgeführt wird und umfasst:
Empfangen (S200) einer RRC-Verbindungswiederherstellungsanforderung von der UE (1), wobei die RRC-Verbindungswiederherstellungsanforderung ein Authentifizierungstoken einschließt, das mit einem Nicht-Zugriff-Stratum, NAS,-Integritätsschlüssel und einer Identität einer Zielzelle als Eingabe erzeugt wurde;
Senden (S210) einer Verifizierungsnachricht an eine Mobilitätsmanagementeinheit (4), MME, wobei die Verifizierungsnachricht das empfangene Authentifizierungstoken einschließt; und
Empfangen (S220) einer Antwort von der MME zur Verifizierung des Authentifizierungstokens.

2. Verfahren nach Anspruch 1, das die Identität der Zielzelle in der Verifizierungsnachricht einschließt.

3. Verfahren zum Wiederherstellen einer Funkressourcensteuerungsverbindung, RRC-Verbindung, für Cellular-Internet-of-Things-Optimierungen der Steuerungsebene, CP CIoT, zwischen einer Benutzereinrichtung (1), UE, und einem Ziel-entwickelten NodeB (3), Ziel-eNB, wenn die UE (1) während der CP CIoT einen Funkverbindungsausfall erfährt,
wobei das Verfahren durch eine Mobilitätsmanagementeinheit (4), MME-Einheit, durchgeführt wird und umfasst:
Empfangen (S400) einer Verifizierungsnachricht von dem Ziel-eNB (3), wobei die Verifizierungsnachricht ein Authentifizierungstoken einschließt, das in der UE (1) mit einem Nicht-Zugriff-Stratum, NAS, -Integritätsschlüssel und einer Identität der Zielzelle als Eingabe erzeugt wurde;
Verifizieren (S410) des empfangenen Authentifizierungstokens; und
Senden (S420) einer Verifizierungsantwortnachricht an den Ziel-eNB (3), um das empfangene Authentifizierungstoken zu verifizieren.

4. Verfahren nach Anspruch 3, wobei die Verifizierungsnachricht die Identität der Zielzelle einschließt.

5. Ziel-entwickelter NodeB (3), Ziel-eNB, zum Wiederherstellen einer Funkressourcensteuerungsverbindung, RRC-Verbindung, für Cellular-Internet-of-Things-Optimierungen der Steuerungsebene, CP CIoT, zwischen einer Benutzereinrichtung (1), UE, und einem Ziel-eNB (3), wenn die UE (1) während der CP CIoT einen Funkverbindungsausfall erfährt, wobei der Ziel-eNB umfasst:
einen Prozessor (30); und
ein Computerprogrammprodukt (32, 33), das Anweisungen speichert, die, wenn sie durch den Prozessor ausgeführt werden, den Ziel-eNB zu Folgendem veranlassen:
Empfangen einer RRC-Verbindungswiederherstellungsanforderung von der UE (1), wobei die RRC-Verbindungswiederherstellungsanforderung ein Authentifizierungstoken einschließt, das mit einem Nicht-Zugriff-Stratum, NAS, -Integritätsschlüssel und einer Identität einer Zielzelle als Eingabe erzeugt wurde;
Senden einer Verifizierungsnachricht an eine Mobilitätsmanagementeinheit (4), MME, wobei die Verifizierungsnachricht das empfangene Authentifizierungstoken einschließt; und
Empfangen einer Antwort von der MME zur Verifizierung des Authentifizierungstokens.

6. Ziel-eNB (3) nach Anspruch 5, wobei die Verifizierungsnachricht eine MAC-Überprüfungsanforderung und die Antwort eine MAC-Überprüfungsbestätigung oder eine MACÜberprüfungsfehlernachricht ist.

7. Ziel-eNB (3) nach Anspruch 6, wobei die MAC-Überprüfungsanforderung MAC-CIoT als das Authentifizierungstoken und/oder Eingabe-MAC-CIoT einschließt.

8. Ziel-eNB (3) nach Anspruch 5, wobei die Verifizierungsnachricht eine Pfadwechselanforderung und die Antwort eine Pfadwechselanforderungsbestätigung oder ein Pfadwechselanforderungsfehler ist.

9. Ziel-eNB (3) nach Anspruch 8, wobei die Pfadwechselanforderung MAC-CIoT als das Authentifizierungstoken und/oder Eingabe-MAC-CIoT einschließt.

10. Ziel-eNB (3) nach Anspruch 5, das die Identität der Zielzelle in der Verifizierungsnachricht einschließt.

11. Mobilitätsmanagementeinheit (4), MME, zur Wiederherstellung einer Funkressourcensteuerungsverbindung, RRC-Verbindung, für Cellular-Internet-of-Things-Optimierungen der Steuerungsebene, CP CIoT, zwischen einer Benutzereinrichtung (1), UE, und einem Ziel-eNB (3), wenn die UE (1) während der CP CIoT einen Funkverbindungsausfall erfährt, wobei die MME (4) umfasst:
einen Prozessor (40); und
ein Computerprogrammprodukt (42, 43), das Anweisungen speichert, die, wenn sie durch den Prozessor ausgeführt werden, die MME zu Folgendem veranlassen:
Empfangen einer Verifizierungsnachricht von dem Ziel-eNB (3), wobei die Verifizierungsnachricht ein Authentifizierungstoken einschließt, das in der UE (1) mit einem Nicht-Zugriff-Stratum-Integritätsschlüssel und einer Identität der Zielzelle als Eingabe erzeugt wurde;
Verifizieren des empfangenen Authentifizierungstokens; und
Senden einer Verifizierungsantwortnachricht an den Ziel-eNB (3), um das empfangene Authentifizierungstoken zu verifizieren.

12. MME nach Anspruch 11, wobei die Verifizierungsnachricht die Identität der Zielzelle einschließt.

13. Computerprogramm (34, 35) zum Wiederherstellen einer Funkressourcensteuerungsverbindung, RRC-Verbindung, für Cellular-Internet-of-Things-Optimierungen der Steuerungsebene, CP CIoT, zwischen einer Benutzereinrichtung (1), UE, und einem Ziel-NodeB (3), Ziel-eNB, wenn die UE (1) während der CP CIoT einen Funkverbindungsausfall erfährt, wobei das Computerprogramm einen Computer-Programmcode umfasst, der, wenn er auf dem Ziel-eNB (3) ausgeführt wird, den Ziel-eNB zu Folgendem veranlasst:
Empfangen einer RRC-Verbindungswiederherstellungsanforderung von der UE (1), wobei die RRC-Verbindungswiederherstellungsanforderung ein Authentifizierungstoken einschließt, das mit einem Nicht-Zugriff-Stratum, NAS, -Integritätsschlüssel und einer Identität einer Zielzelle als Eingabe erzeugt wurde;
Senden einer Verifizierungsnachricht an eine Mobilitätsmanagementeinheit (4), MME, wobei die Verifizierungsnachricht das empfangene Authentifizierungstoken einschließt; und
Empfangen einer Antwort von der MME zur Verifizierung des Authentifizierungstokens.

14. Computerprogramm (44, 45) zum Wiederherstellen einer Funkressourcensteuerungsverbindung, RRC-Verbindung, für Cellular-Internet-of-Things-Optimierungen der Steuerungsebene, CP CIoT, zwischen einer Benutzereinrichtung (1), UE, und einem Ziel-Evolved-NodeB (3), Ziel-eNB, wenn die UE (1) während der CP CIoT einen Funkverbindungsausfall erfährt, wobei das Computerprogramm einen Computer-Programmcode umfasst, der, wenn er auf einer Mobilitätsmanagementeinheit (4), MME, ausgeführt wird, die MME (4) zu Folgendem veranlasst:
Empfangen einer Verifizierungsnachricht von dem Ziel-eNB (3), wobei die Verifizierungsnachricht ein Authentifizierungstoken einschließt, das in der UE (1) mit einem Nicht-Zugriff-Stratum-Integritätsschlüssel und einer Identität der Zielzelle als Eingabe erzeugt wurde;
Verifizieren des empfangenen Authentifizierungstokens; und
Senden einer Verifizierungsantwortnachricht an den Ziel-eNB (3), um das empfangene Authentifizierungstoken zu verifizieren.

15. Verfahren zum Wiederherstellen einer Funkressourcensteuerungsverbindung, RRC-Verbindung, für Cellular-Internet-of-Things-Optimierungen der Steuerungsebene, CP CIoT, zwischen einer Benutzereinrichtung (1), UE, und einem Ziel-entwickelten NodeB (3), Ziel-eNB, wenn die UE (1) während der CP CIoT einen Funkverbindungsausfall erfährt, wobei das Verfahren durch die UE (1) durchgeführt wird und umfasst:
- Erzeugen eines Authentifizierungstokens mit einem Nicht-Zugriff-Stratum-, NAS-, Integritätsschlüssel und der Identität der Zielzelle als Eingabe,
- Senden einer ersten RRC-Verbindungswiederherstellungsnachricht an den Ziel-eNB (3), wobei die erste RRC-Verbindungswiederherstellungsnachricht das Authentifizierungstoken einschließt, und
- Empfangen einer zweiten RRC-Verbindungswiederherstellungsnachricht von dem Ziel-eNB (3).

## Revendications

1. Procédé de rétablissement d'une connexion de commande de ressource radio, RRC, pour des optimisations l'Internet des objets cellulaire de plan de commande, CP CIoT, entre un équipement utilisateur (1), UE, et un NodeB évolué cible (3), eNB cible, si l'UE (1) subit un échec de liaison radio pendant le CP CIoT,
le procédé étant mis en œuvre par l'eNB cible (3) et comprenant :
la réception (S200) d'une demande de rétablissement de connexion RRC depuis l'UE (1), dans lequel la demande de rétablissement de connexion RRC inclut un jeton d'authentification généré avec une clé d'intégrité de strate de non-accès, NAS, et une identité de cellule cible en guise d'entrée ;
l'envoi (S210) d'un message de vérification à une entité de gestion de mobilité (4), MME, dans lequel le message de vérification inclut le jeton d'authentification reçu ; et
la réception (S220) d'une réponse depuis la MME, de vérification du jeton d'authentification.

2. Procédé selon la revendication 1, incluant l'identité de la cellule cible dans le message de vérification.

3. Procédé de rétablissement d'une connexion de commande de ressource radio, RRC, pour des optimisations l'Internet des objets cellulaire de plan de commande, CP CIoT, entre un équipement utilisateur (1), UE, et un NodeB évolué cible (3), eNB cible, si l'UE (1) subit un échec de liaison radio pendant le CP CIoT,
le procédé étant mis en œuvre par une entité de gestion de mobilité (4), MME, et comprenant :
la réception (S400) d'un message de vérification depuis l'eNB cible (3), dans lequel le message de vérification inclut un jeton d'authentification généré dans l'UE (1) avec une clé d'intégrité de strate de non-accès, NAS, et une identité de cellule cible en guise d'entrée ;
la vérification (S410) du jeton d'authentification reçu ; et
l'envoi (S420) à l'eNB cible (3) d'un message de réponse de vérification, vérifiant le jeton d'authentification reçu.

4. Procédé selon la revendication 3, dans lequel le message de vérification inclut l'identité de la cellule cible.

5. Nœud B évolué cible (3), eNB cible, pour le rétablissement d'une connexion de commande de ressource radio, RRC, pour des optimisations l'Internet des objets cellulaire de plan de commande, CP CIoT, entre un équipement utilisateur (1), UE, et l'eNB cible (3), si l'UE (1) subit un échec de liaison radio pendant le CP CIoT, l'eNB cible comprenant :
un processeur (30) ; et
un produit programme informatique (32, 33) stockant des instructions qui, lorsqu'elles sont exécutées par le processeur, amènent l'eNB cible à :
recevoir une demande de rétablissement de connexion RRC depuis l'UE (1), dans lequel la demande de rétablissement de connexion RRC inclut un jeton d'authentification généré avec une clé d'intégrité de strate de non-accès, NAS, et une identité de cellule cible en guise d'entrée ;
envoyer un message de vérification à une entité de gestion de mobilité (4), MME, dans lequel le message de vérification inclut le jeton d'authentification reçu ; et
recevoir une réponse depuis la MME, de vérification du jeton d'authentification.

6. eNB cible (3) selon la revendication 5, dans lequel le message de vérification est une demande de vérification MAC, et la réponse est un message d'accusé de réception de vérification MAC ou d'échec de vérification MAC.

7. eNB cible (3) selon la revendication 6, dans lequel la demande de vérification MAC inclut MAC-CIoT en guise de jeton d'authentification précité et/ou Input-MAC-CIoT.

8. eNB cible (3) selon la revendication 5, dans lequel le message de vérification est une demande de commutation de trajet, et la réponse est un accusé de réception de demande de commutation de trajet ou un échec de demande de commutation de trajet.

9. eNB cible (3) selon la revendication 8, dans lequel la demande de commutation de trajet inclut MAC-CIoT en guise de jeton d'authentification précité, et/ou Input-MAC-CIoT.

10. eNB cible (3) selon la revendication 5, incluant l'identité de la cellule cible dans le message de vérification.

11. Entité de gestion de mobilité (4), MME, pour le rétablissement d'une connexion de commande de ressource radio, RRC, pour des optimisations l'Internet des objets cellulaire de plan de commande, CP CIoT, entre un équipement utilisateur (1), UE, et un eNB cible (3), si l'UE (1) subit un échec de liaison radio pendant le CP CIoT, la MME (4) comprenant :
un processeur (40) ; et
un produit programme informatique (42, 43) stockant des instructions qui, lorsqu'elles sont exécutées par le processeur, amènent la MME à :
recevoir un message de vérification depuis l'eNB cible (3), dans lequel le message de vérification inclut un jeton d'authentification généré dans l'UE (1) avec une clé d'intégrité de strate de non-accès et une identité de cellule cible en guise d'entrée ;
vérifier le jeton d'authentification reçu ; et
envoyer à l'eNB cible (3) un message de réponse de vérification, vérifiant le jeton d'authentification reçu.

12. MME selon la revendication 11, dans laquelle le message de vérification inclut l'identité de la cellule cible.

13. Programme informatique (34, 35) pour le rétablissement d'une connexion de commande de ressource radio, RRC, pour des optimisations l'Internet des objets cellulaire de plan de commande, CP CIoT, entre un équipement utilisateur (1), UE, et un NodeB cible (3), eNB cible, si l'UE (1) subit un échec de liaison radio pendant le CP CIoT, le programme informatique comprenant un code de programme informatique qui, lorsqu'il est exécuté sur l'eNB cible (3), amène l'eNB cible à :
recevoir une demande de rétablissement de connexion RRC depuis l'UE (1), dans lequel la demande de rétablissement de connexion RRC inclut un jeton d'authentification généré avec une clé d'intégrité de strate de non-accès, NAS, et une identité de cellule cible en guise d'entrée ;
envoyer un message de vérification à une entité de gestion de mobilité (4), MME, dans lequel le message de vérification inclut le jeton d'authentification reçu ; et
recevoir une réponse depuis la MME, de vérification du jeton d'authentification.

14. Programme informatique (44, 45) pour le rétablissement d'une connexion de commande de ressource radio, RRC, pour des optimisations l'Internet des objets cellulaire de plan de commande, CP CIoT, entre un équipement utilisateur (1), UE, et un NodeB évolué cible (3), eNB cible, si l'UE (1) subit un échec de liaison radio pendant le CP CIoT, le programme informatique comprenant un code de programme informatique qui, lorsqu'il est exécuté sur une entité de gestion de mobilité (4), MME, amène la MME (4) à :
recevoir un message de vérification depuis l'eNB cible (3), dans lequel le message de vérification inclut un jeton d'authentification généré dans l'UE (1) avec une clé d'intégrité de strate de non-accès et une identité de cellule cible en guise d'entrée ;
vérifier le jeton d'authentification reçu ; et
envoyer à l'eNB cible (3) un message de réponse de vérification, vérifiant le jeton d'authentification reçu.

15. Procédé de rétablissement d'une connexion de commande de ressource radio, RRC, pour des optimisations l'Internet des objets cellulaire de plan de commande, CP CIoT, entre un équipement utilisateur (1), UE, et un NodeB évolué cible (3), eNB cible, si l'UE (1) subit un échec de liaison radio pendant le CP CIoT, le procédé étant mis en œuvre par l'UE (1) et comprenant :
- la génération d'un jeton d'authentification avec une clé d'intégrité de strate de non-accès, NAS, et une identité de cellule cible en guise d'entrée,
- l'envoi d'un premier message de rétablissement de connexion RRC à l'eNB cible (3), dans lequel le premier message de rétablissement de connexion RRC inclut le jeton d'authentification, et
- la réception d'un deuxième message de rétablissement de connexion RRC depuis l'eNB cible (3).
